# EUROPÄISCHE PATENTSCHRIFT

(11) **EP 4 050 517 B1**
(45) Veröffentlichungstag und Bekanntmachung des Hinweises auf die Patenterteilung: **25.10.2023**
(21) Anmeldenummer: 21159317.3
(22) Anmeldetag: 25.02.2021
(51) Int. Cl.: G06K 19/08, G06K 19/10, G06K 19/067

(54) **ANORDNUNG ZUM ERMITTELN EINER LEITERPLATTENKENNUNG**
ARRANGEMENT FOR DETERMINING A CIRCUIT BOARD IDENTIFIER
AGENCEMENT DE DÉTERMINATION D'UNE IDENTIFICATION DE LA CARTE DE CIRCUIT IMPRIMÉ

(43) Veröffentlichungstag der Anmeldung: 31.08.2022
(73) Patentinhaber: Siemens Aktiengesellschaft, 80333 München (DE)
(72) Erfinder: Matschnig, Martin, 3430 Tulln (AT); Hinterstoisser, Thomas, 2102 Bisamberg (AT); Fischer, Bernhard, 1060 Wien (AT); Meyrath, Wilhelm, 1220 Wien (AT); Taucher, Herbert, 1190 Wien (AT)
(74) Vertreter: Siemens Patent Attorneys

(56) Entgegenhaltungen:
- US-A1- 2013 276 151
- WEI LINGXIAO ET AL: "BoardPUF: Physical Unclonable Functions for printed circuit board authentication", 2015 IEEE/ACM INTERNATIONAL CONFERENCE ON COMPUTER-AIDED DESIGN (ICCAD), IEEE, 2. November 2015 (2015-11-02), Seiten 152-158, XP032845761, DOI: 10.1109/ICCAD.2015.7372563 [gefunden am 2016-01-05]

## Beschreibung

### Technisches Gebiet

Die vorliegende Erfindung betrifft allgemein das Gebiet der elektronischen Bauteile bzw. integrierten Schaltungen, insbesondere anwendungsspezifische, integrierte Schaltungen (ASICs). Im Speziellen bezieht sich die vorliegende Erfindung auf eine Anordnung zum Ermitteln einer eindeutigen Kennung einer Leiterplatte, über welche ein auf einer Leiterplatte angebrachtes, elektronisches Bauteil, insbesondere eine anwendungsspezifische, integrierte Schaltung bzw. ein ASIC, eindeutig mit der Leiterplatte verknüpft wird. Dazu weist die Anordnung zumindest eine Physical Unclonable Functions- oder PUF-Einheit mit Ringoszillatoren auf, welche anhand von Ringoszillatorfrequenzen die eindeutige Leiterplattenkennung ermittelt und welche im elektronischen Bauteil angeordnet ist. Weiterhin weist die Anordnung Verzögerungselemente auf, welches auf der Leiterplatte angebracht sind. Dabei wird jeweils von einem Verzögerungselement eine Oszillatorschleife eines jeweiligen Ringoszillators der PUF-Einheit gebildet.

### Stand der Technik

Integrierte Schaltungen oder englisch Integrated Circuits (kurz ICs), wie z.B. anwendungsspezifische, integrierte Schaltungen (kurz ASICs), Field Programmable Gate Arrays (kurz FPGAs) oder ein so genanntes System-on-Chip (kurz SoC), sind elektronische Bauteile, welche heutzutage in vielen elektrischen und/oder elektronischen Geräten oder Systemen, wie z.B. in speicherprogrammierbaren Steuerung, Grafikprozessoren, etc. oder bei kryptographischen Algorithmen in Computersystem, etc. eingesetzt werden. Mit Hilfe von elektronischen Bauteilen, welche als integrierte Schaltungen ausgeführt sind, können heutzutage durch entsprechendes Design und Ausgestaltung unterschiedlichste logische Schaltungen und Funktionen in elektrischen Geräten realisiert werden. Diese reichen von einfachen Zählern oder Schnittstellen für Digitalbausteinen bis hin zu hochkomplexen Schaltungen, wie z.B. Mikrocontrollern, Speicherkontrollern, etc.

Für den Aufbau von elektrischen Geräten sind als elektronische Bauteile ausgestaltete, integrierte Schaltungen, wie z.B. ASICs, etc. mit weiteren Bauelementen (z.B. Widerständen, Spulen, Kondensatoren, Kühlkörper, Dioden, Transistoren, etc.) auf Leiterplatten bzw. so genannten gedruckten Schaltungen (englisch auch: Printed Circuit Boards oder PCBs) angebracht. Leiterplatten dienen dabei einerseits der mechanischen Befestigung und andererseits der elektrischen Verbindung der integrierten Schaltungen und der weiteren Bauelemente. Sie bestehen aus elektrisch isolierendem Material mit daran haftenden, leitenden Verbindungen, den Leiterbahnen, welche zumeist aus einer dünnen Kupferschicht geätzt werden. Die Bauteile des elektrischen Geräts werden meist auf Lötflächen oder Lötaugen angebracht. Um einer höhere Packungsdichte, insbesondere bei oberflächenmontierten bzw. Surface-Mounted-Devices-(kurz: SMD)-Bauteilen gerecht zu werden, können Leiterplatten zumindest beidseitig leitende Verbindungen aufweisen oder mehrschichtig aufgebaut sein. Die Verbindungen zwischen den einzelnen, leitenden Schichten bzw. Leitungsschichten der Leiterplatte werden mit Durchkontaktierungen oder so genannten Vias hergestellt. Weiterhin können einfache passive Bauelemente, wie z.B. Widerstände, Induktivitäten, kleine Kapazitäten, etc. in die Leiterplatte integriert sein.

Vor allem bei komplexen elektronischen Geräten und Systemen, wie z.B. speicherprogrammierbaren Steuerungen, Prozessoren, Grafikkarten, etc. ist die Industrie mittlerweile mit einer steigenden Zahl von Produkt- bzw. Hardwarefälschungen konfrontiert. Dabei können unterschiedliche Ansätze bei der Hardwarefälschung beobachtet werden. So werden beispielsweise elektronische Bauteile, insbesondere ASIC-Bauteile, von den Leiterplatten defekter elektronischer Geräte entfernt bzw. abgelötet und direkt auf neuen Leiterplatten angebracht, um z.B. ein elektronisches Gerät bzw. eine Original-Hardware nachzubauen. Auch undichte Stellen in Lieferketten bei der Herstellung elektronischer Geräte können beispielsweise dazu führen, dass Originalbauteile bzw. Original-ASICs entwendet und/oder achtlos weggeworfen werden und dadurch auf Leiterplatten von Drittanbietern bzw. in gefälschten Hardwareprodukten landen. Dies kann insbesondere sehr große Hersteller betreffen, welche eine Vielzahl von bestückten Leiterplatten für die tägliche Arbeit benötigen, und bei welchen es sehr schwierig sein kann, die Lieferkette 100%ig abzusichern. Eine weitere Möglichkeit ein elektronisches Bauteil, wie z.B. einen ASIC, für Hardwarefälschungen zu nutzen, kann beispielsweise dadurch gegeben sein, dass neue oder wiederverwendete elektronische Bauteile z.B. in einer Laborumgebung in Betrieb genommen und mittels so genanntem Reverse Engineering analysiert und gegebenenfalls kopiert und/oder manipuliert werden.

Im Bereich der Hersteller von integrierten Schaltungen bzw. von elektronischen Bauteilen sowie von elektronischen Geräten ist das Problem der Hardwarefälschung bereits seit einiger Zeit bekannt. Daher wurden bereits mehrere Ansätze und Methoden vorgeschlagen und entwickelt, um das Problem der Hardwarefälschung zu entschärfen und eine Integrität einer Leiterplatte, auf welche ein elektronisches Bauteil angebracht wird, und/oder eine Authentizität eines elektronischen Geräts zu überprüfen.

Aus der Schrift *"*Hamlet, J. et al.; "Unique Signature from Printed Circuit Board Design Pattern and Surface Mount Passives" IEEE, International Carnahan Conference on Security Technology (ICCST), Madrid, 2017*."* ist beispielweise ein Verfahren bekannt, bei welchem produktionsspezifische Eigenheiten von Leiterplatten in Kombination mit auf der jeweiligen Leiterplatte angebrachten einfachen, passiven Bauelementen (z.B. Widerstände, Kondensatoren, etc.) oder in Kombination mit Strukturen von auf der jeweiligen Leiterplatte angebrachten Leitermustern genutzt werden, um eindeutige Kennungen für einzelne Leiterplatten zu generieren. Die erzeugte, Leiterplattensignatur bzw. -kennung kann dann zur Integritäts- und Authentizitätsprüfung verwendet werden, weist allerdings den Nachteil auf, dass zusätzliche Bauelemente und/oder Strukturen zum Generieren der eindeutigen Leiterplattenkennung auf der Leiterplatte angebracht werden müssen.

Eine weitere Methode zur Fälschungssicherung von Hardware ist beispielsweise aus der Schrift "Hennessy et al., "JTAG-Based Robust PCB Authentication for Protection Against Counterfeiting Attacks", 2016, 21st Asia and South Pacific Design Automation Conference (ASP-DAC), Macau, 2016, pp. 56-61*";* bekannt. Dabei wird die so genannte Boundary Scan Chain Architecture (BSA) basierend auf Joint Test Action Group (JTAG) oder IEEE-Standard 1149.1 verwendet, durch welchen eine Methodik zum Testen und Debuggen von integrierten Schaltungen, also auf Leiterplatten angebrachten elektronischen Bauteilen, beschrieben wird, und mit dem integrierte Schaltungen bzw. elektronische Bauteile auf Funktionen getestet werden können, während sie sich bereits in ihrer Arbeitsumgebung - z.B. verlötet auf der Leiterplatte - befinden. Bei dem vorgeschlagenen Verfahren werden Verzögerungen auf den JTAG-Pfaden zwischen den elektronischen Bauteilen bzw. integrierten Schaltungen gemessen und daraus eine eindeutige Kennung der Leiterplatte abgeleitet. Dabei wird die Kennung der Leiterplatte herstellerseitig generiert und dann in einer zentralen Datenbank abgelegt. Ein Kunde kann - bei Verdacht - mit derselben Methode eine Kennung der Leiterplatte generieren und mit der in der zentralen Datenbank gespeicherten Leiterplattenkennung bzw. -signatur vergleichen. Um eine Fälschung festzustellen, ist allerdings ein Zugriff auf die zentrale Datenbank bzw. auf die darin gespeicherten Leiterplatten-Kennungen notwendig.

Aus der Schrift *"*Wie et al., "BoardPUF: Physical Unclonable Functions for printed circuit board authentication," 2015 IEEE/ACM International Conference on Computer-Aided Design (ICCAD), Austin, TX, 2015, pp. 152-158*."* ist ein weiterer Ansatz bekannt, um auf Leiterplatten angebrachte, integrierte Schaltungen vor Fälschung und/oder widerrechtlicher Nutzung oder Wiederverwendung zu schützen. Dabei wird zum Generieren einer Leiterplatten-spezifischen Kennung die Idee so genannter physikalisch unklonbare Funktionen, der sogenannten Physical Unclonable Functions (PUFs), verwendet.

PUFs in unterschiedlichen Realisierungsvarianten sind beispielsweise aus der Schrift *"*Maes, R.; Verbauwhede, I. (2010); "Phyisically Unclonable Functions: A Study on the State of the Art and Future Research Directions", In: Sadeghi AR., Naccache D. (eds) Towards Hardware-Intrinsic Security. Information Security and Cryptography; Springer, Berlin, Heidelberg*."* bekannt. PUF-Einheiten dienen dazu, Objekte zuverlässig anhand ihrer intrinsischen physikalischen Eigenschaften zu identifizieren. Eine physikalische Eigenschaft eines Gegenstands wird dabei als individueller Fingerabdruck verwendet, um Integrität und Authentizität dieses Gegenstandes zu überprüfen. Dazu wird eine PUF-Einheit mit einer Eingabe - einer sogenannten Challenge - beaufschlagt, die Eingabe mit bekannten Methoden (Funktion) bearbeitet und daraus ein Rückgabewert (Response) erzeugt, welcher bei einem Nachbau oder einer Fälschung des elektronischen Geräts bei Beaufschlagen mit der gleichen Challenge nicht generierbar ist.

In der genannten Schrift Wei et al. kommt eine sogenannte Ringoszillator-PUF-Einheit zum Einsatz, bei welcher Ringoszillatoren über zeitliche Verzögerungen rückgekoppelt und z.B. auf einen Eingang einer Selektionsschaltung bzw. eines Multiplexers gelegt werden. Eine Dauer der Schwingung bzw. die jeweilige Ringoszillatorfrequenz hängt wieder von kleinen Produktionstoleranzen ab und ist für die PUF-Einheit individuell. Der Rückgabewert wird beispielweise durch einen Vergleich von Frequenzen der Ringoszillatoren der PUF-Einheit erreicht oder durch Auslesen des Multiplexers zu einem bestimmten Zeitpunkt. Für die Ringoszillator-PUF-Einheit, welche zum Generieren einer eindeutigen Leiterplattensignatur eingesetzt wird, wird die Oszillatorkette der integrierten Schaltung mit Kapazitäten außerhalb des elektronischen Bauteils als Oszillatorschleife erweitert. Dabei sind die Kapazitäten allerdings nicht als diskrete Bauelemente auf der Leiterplatte angebracht, sondern direkt als Kapazitäten-Einheiten in die Metallschichten der Leiterplatten eingebettet. Jedem Ringoszillator ist dabei eine Kapazitäten-Einheit als Verzögerungselement zugeordnet. Diese Methode weist ebenfalls den Nachteil auf, dass die eingebetteten Kapazitäten-Einheiten bereits beim Leiterplatten-Design bzw. bei der Produktion als "On-Board"-Elemente vorgesehen werden müssen. Dadurch steigen Aufwand und Kosten bei der Herstellung der Leiterplatte und des elektronischen Geräts. Weiterhin können thermische Effekte in der Leiterplatte (z.B. unterschiedliche Erwärmung, etc.) beim Betrieb des elektrischen Geräts gegebenenfalls zu Veränderungen der jeweiligen zeitlichen Verzögerung der jeweiligen Kapazitäten-Einheit und damit zu Veränderungen in der Frequenz des jeweiligen Ringoszillators führen. Das kann zu Veränderungen in der ermittelten, Leiterplattenkennung damit gegebenenfalls zu Funktionsstörungen des elektronischen Bauteils führen, wenn die Kennung fehlerhaft ermittelt wurde.

Aus US2013276151 A1 ist eine weitere Anordnung zum Ermitteln einer eindeutigen Leiterplattenkennung unter Verwendung einer PUF-Einheit bekannt.

### Darstellung der Erfindung

Der Erfindung liegt daher die Aufgabe zugrunde, eine Anordnung zum Ermitteln einer eindeutigen Leiterplattenkennung anzugeben, welche eine Verbesserung zum Stand der Technik darstellen und durch welche auf einfache Weise, ohne Fehlfunktionen und zusätzliche Kosten ein elektronisches Bauteil eindeutig mit einer Leiterplatte, auf welcher das elektronische Bauteil montiert ist, verknüpft werden kann.

Diese Aufgabe wird durch eine Anordnung der eingangs genannten Art mit den Merkmalen gemäß dem unabhängigen Patentanspruch gelöst. Vorteilhafte Ausführungsformen der vorliegenden Erfindung sind in den abhängigen Ansprüchen beschrieben. Die Lösung der Aufgabe erfolgt durch eine Anordnung zum Ermitteln einer eindeutigen Leiterplattenkennung, durch welche ein auf einer Leiterplatte angebrachtes, elektronisches Bauteil eindeutig mit der Leiterplatte verknüpft wird. Die Anordnung weist dabei zumindest eine PUF-Einheit mit Ringoszillatoren, welche anhand von Frequenzen der Ringoszillatoren die Leiterplattenkennung ermittelt und welche im elektronischen Bauteil angeordnet ist, und Verzögerungselemente auf, welche auf der Leiterplatte angebracht sind. Dabei bildet jeweils ein Verzögerungselement eine Oszillatorschleife eines Ringoszillators der PUF-Einheit. Weiterhin sind die Verzögerungselemente als auf der Leiterplatte geführte Leiterbahnen ausgestaltet. Dabei weist jedes Verzögerungselement erste Abschnitte, welche auf einer ersten Leitungsschicht der Leiterplatte geführt sind, und zweite Abschnitte, welche auf einer zweiten Leitungsschicht der Leiterplatte geführt sind, auf, wobei die auf der ersten Leitungsschicht der Leiterplatte geführten, ersten Abschnitte des jeweiligen Verzögerungselements und die auf der zweiten Leitungsschicht der Leiterplatte geführten, zweiten Abschnitte des jeweiligen Verzögerungselements über elektrische Durchkontaktierungen verbunden sind. Weiterhin sind jeweils zwei Verzögerungselemente auf der Leiterplatte derart angeordnet bzw. derart kombiniert, dass sich die jeweiligen, ersten Abschnitte der jeweils zwei Verzögerungselemente mit den jeweiligen zweiten Abschnitten der jeweils zwei Verzögerungselemente in zumindest einem Punkt überlappen bzw. überscheiden, wobei in dem zumindest einen Überlappungspunkt bzw. -bereich zwischen den jeweils zwei Verzögerungselementen keine elektrisch leitende Verbindung bzw. kein elektrisch leitender Kontakt besteht.

Der Hauptaspekt der erfindungsgemäß vorgeschlagenen Lösung besteht darin, dass mittels einer speziellen Anordnung von jeweils zwei Verzögerungselementen, welche für eine leiterplattenspezifische Beeinflussung der Frequenz des jeweiligen Ringoszillators der PUF-Einheit sorgen, auf der Leiterplatte ein auf der Leiterplatte realisiertes verdrilltes Leiterbahnenpaar realisiert wird. Die abwechselnd auf einer ersten und einer zweiten Leitungsschicht geführten Leiterbahnen-Abschnitte der jeweils zwei Verzögerungselemente überlappen bzw. überscheiden sich in zumindest einem Punkt, ohne elektrischen Kontakt zueinander zu haben. Durch die symmetrische Anordnung und diese Überlappungspunkte von jeweils zwei Verzögerungselementen wird eine thermische Kompensation erreicht. Diese ermöglicht eine thermische Stabilität über einen relativ großen Temperaturbereich beim Ermitteln der Leiterplattenkennung mit einer PUF-Einheit, wodurch die Leiterplattenkennung während des laufenden Betriebs eines elektrischen Geräts bzw. des elektronischen Bauteils weitgehend fehlerfrei ermittelt werden kann.

Der Wechsel von der erste zur zweiten bzw. von der zweiten zur ersten Leitungsschicht im Verlauf des jeweiligen Verzögerungselements erfolgt mittels elektrischer Durchkontaktierungen, welche insbesondere eine Hauptquelle für eine Maß für einen Informationsgehalt bzw. eine Entropie für die PUF-Einheit bilden, durch welche die jeweilige Ringoszillatorfrequenz des jeweiligen Ringoszillators vom jeweiligen Verzögerungselement leiterplattenspezifisch beeinflusst wird. Damit liefert die Anordnung genügend Varianz bei unterschiedlichen Leiterplatten, um z.B. Fälschungen, Reverse Engineering-Versuch von elektronischen Bauteilen, welche von einer Originalleiterplatte abmontiert oder entfernt wurden, auf einfache Weise zu verhindern. Sogar wenn das entfernte oder abmontierte, elektronische Bauteil beispielsweise wieder auf derselben Leiterplatte angebracht wird, kann eine unterschiedliche Leitfähigkeit von z.B. neu angebrachten Lötstellen bzw. eine minimale räumliche Verschiebung des elektronischen Bauteils auf der Leiterplatte zu einer veränderten Leiterplattenkennung führen und z.B. bei einem Vergleich mit einer ursprünglich ermittelten Leiterplattenkennung eine Inbetriebnahme des elektronischen Bauteils verhindern.

Weiterhin ermöglicht die Anordnung durch Verzögerungselemente, welche als Leiterbahnen mit einem speziellen Layout auf einer Leiterplatte ausgestaltet sind, einen kostengünstige und einfach realisierbaren Fälschungsschutz für elektronische Bauteile, wie z.B. ASICs, etc. ohne einem Einsatz von zusätzlichen Bauelementen oder Hardwareelementen auf der Leiterplatte.

Es ist weiterhin günstig, wenn die elektrischen Durchkontaktierungen, welche von den jeweils zwei Verzögerungselementen verwendet werden, auf der Leiterplatte benachbart angeordnet sind. Dadurch können beispielsweise die jeweiligen ersten Abschnitte der jeweils zwei Verzögerungselemente sowie die jeweiligen zweiten Abschnitte der jeweils zwei Verzögerungselement z.B. parallel zueinander angeordnet und damit platzsparend auf der jeweiligen Leitungsschicht der Leiterplatte angeordnet werden.

Vorteilhafterweise ist die Anordnung dazu eingerichtet, während einer Verknüpfungsphase die Leiterplattenkennung zu ermitteln und permanent im elektronischen Bauteil abzuspeichern. Die permanente Speicherung im Bauteil erfolgt z.B. mit Hilfe von sogenannten eFuses. Die Verknüpfungsphase kann z.B. bei einem erstmaligen Einschalten, wie z.B. bei einem erstmaligen, so genannten Power-on Reset, des elektronischen Bauteils bzw. der integrierten Schaltung durchgeführt werden und in einer vertrauenswürdigen Umgebung, wie z.B. beim Hersteller, etc. durchlaufen werden. Damit wird das elektronische Bauteil auf einfache Weise sicher mit der original verwendeten Leiterplatte verknüpft.

Idealerweise ist die Anordnung weiterhin dazu eingerichtet, dass die Leiterplattenkennung während eines laufenden Betriebs des elektronischen Bauteils wiederholt zu generieren. Von der Anordnung kann beispielsweise bei jedem Einschalten und/oder Hochfahren des Bauteils bzw. der integrierten Schaltung (z.B. bei jedem Power-on Reset) die Leiterplattenkennung neuerlich ermittelt werden. Weiterhin ist die Anordnung auch dazu eingerichtet, dass die während des laufenden Betriebs generierte Leiterplattenkennung mit der während der Verknüpfungsphase generierten und permanent im Bauteil abgespeicherten Leiterplattenkennung verglichen wird. Je nachdem, ob die beiden Leiterplattenkennungen übereinstimmen oder nicht, kann dann das Einschalten und/oder Hochfahren des elektronischen Bauteils fortgesetzt oder gestoppt werden. Dadurch werden sehr effektiv Versuche von sogenanntem Reverse Engineering des elektronischen Bauteils und/oder Fälschungen des Bauteils verhindert.

Eine zweckmäßige Weiterbildung der Erfindung sieht vor, dass die Anordnung eine Speichereinheit ausweist, in welcher die Leiterplattenkennung während der Verknüpfungsphase permanent abgespeichert wird. Die Speichereinheit ist beispielsweise im elektronischen Bauteil angeordnet. Die Speichereinheit kann idealerweise für ein permanentes Abspeichern der Leiterplattenkennung aktivierbar ausgestaltet sein. D.h. die Verknüpfungsphase bzw. das permanente Abspeichern der Leiterplattenkennung wird erst ausgeführt, wenn die Speichereinheit dafür aktiviert worden ist. Dadurch kann das elektronische Bauteil bzw. die integrierte Schaltung beispielsweise vom Hersteller, etc. erstmalig eingeschalten und getestet werden, ohne dass die Verknüpfungsphase durchlaufen bzw. die Leiterplattenkennung bereits z.B. während einer Testphase permanent in der Speichereinheit abgelegt wird.

Idealerweise ist die Anordnung dazu eingerichtet, dass eine Aktivierung der Speichereinheit für das permanente Abspeichern der Leiterplattenkennung über eine Testschnittstelle erfolgt. Dadurch kann auf sehr einfache Weise die Speichereinheit aktiviert werden. Beim nächsten Einschalten bzw. Power-On Reset wird dann die Verknüpfungsphase durchlaufen bzw. die ermittelte Leiterplattenkennung einmalig und permanent in die Speichereinheit geschrieben. Als Testschnittstelle für die Aktivierung der Speichereinheit kann z.B. ein JTAG-Interface genutzt werden. JTAG steht für Joint Test Action Group oder den IEEE-Standard 1149.1, durch welchen eine Methodik zum Testen und Debuggen von integrierten Schaltungen, also auf Leiterplatten angebrachten elektronischen Bauteilen, beschrieben wird, und mit dem integrierte Schaltungen bzw. elektronische Bauteile auf Funktionen getestet werden können.

Eine zweckmäßige Ausgestaltung der Erfindung sieht vor, dass die Speichereinheit als Anordnung bauteilinterner Sicherungsleitungen ausgestaltet ist. Diese Anordnung von Sicherungsleitungen stellt eine Anordnung von Sicherungselementen im elektronischen Bauteil dar, welche z.B. in einer Testphase deaktiviert ist und sehr einfache z.B. über eine Testschnittstelle nach Beendigung der Testphase aktiviert werden kann. Ist die Anordnung von Sicherungsleitungen aktiviert, so kann in der Verknüpfungsphase z.B. durch entsprechendes Aufschmelzen von Sicherungsleitungen die Leiterplattenkennung permanent und relativ fälschungssicher in das elektronische Bauteil eingebrannt werden.

Vorzugsweise ist das elektronische Bauteil als sogenannte anwendungsspezifische, integrierte Schaltung oder kurz ASIC ausgeführt.

### Kurzbeschreibung der Zeichnung

Die Erfindung wird nachfolgend in beispielhafter Weise anhand der beigefügten Figuren erläutert. Es zeigen:
Figur 1 schematisch und beispielhaft eine erfindungsgemäße Anordnung zum Ermitteln einer Leiterplattenkennung mittels einer PUF-Einheit mit Ringoszillatoren
Figur 2 beispielshaft und schematisch ein Layout der auf der Leiterplatte angeordneten Verzögerungselemente der Ringoszillatoren der PUF-Einheit

### Ausführung der Erfindung

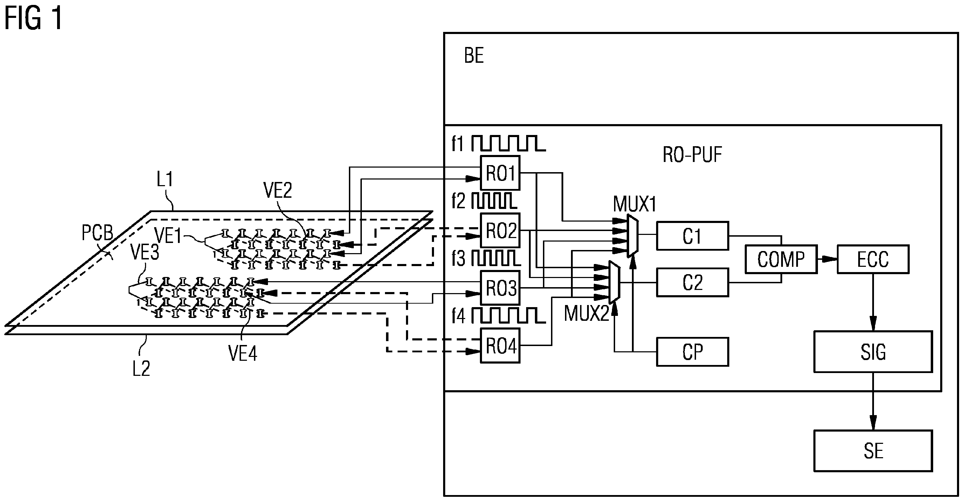

Figur 1 zeigt schematisch eine beispielhafte Ausführungsform der Anordnung zum Ermitteln einer eindeutigen Leiterplattenkennung SIG. Durch die eindeutige Leiterplattenkennung wird eine Leiterplatte PCB mit einem elektronischen Bauteil BE, welches auf der Leiterplatte PCB z.B. mittels eines Bestückungsverfahren, Auflöten, etc. montiert ist, permanent verknüpft und kann nicht mehr in Verbindung mit einer anderen Leiterplatte PCB beispielsweise für sogenanntes Reverse-Engineering verwendet werden. In der Figur 1 ist ein elektronisches Bauteil BE dargestellt, welches beispielsweise als integrierte Schaltung bzw. als anwendungsspezifische, integrierte Schaltung bzw. ASIC ausgeführt ist. Diese elektronische Bauteil BE ist z.B. für einen Aufbau eines elektrischen oder elektronischen Geräts auf einer Leiterplatte PCB angebracht, wobei in Figur 1 der Einfachheit halber die Leiterplatte PCB nur ausschnittsweise dargestellt ist. Die Leiterplatte PCB ist mehrschichtig ausgeführt und weist zumindest zwei beispielhafte Leitungsschichten L1, L2 auf, auf welchen Leiterbahnen als elektrische Verbindungen zwischen den auf der Leiterplatte PCB angebrachten Bauteilen BE geführt werden können und welche durch zumindest eine isolierende Schicht getrennt sind. Für eine Verbindung zwischen den leitenden Bereichen bzw. den Leiterbahnen verschiedener Leitungsschichten L1, L2 der Leiterplatte PCB sorgen elektrische Durchkontaktierungen bzw. sogenannte Vias.

Die erfindungsgemäße Anordnung weist zumindest eine PUF-Einheit RO-PUF auf, wobei PUF für Physical Unclonable Functions steht. Die PUF-Einheit RO-PUF ist als im elektronischen Bauteil BE angeordnet bzw. in das elektronische Bauteil BE integriert. Die PUF-Einheit RO-PUF ist sogenannte Ringoszillator-PUF-Einheit ausgestaltet und weist eine geradzahlige Anzahl an Ringoszillatoren RO1, RO2, RO3, RO4 aus. Der Einfachheit halber sind in Figur 1 vier beispielhafte Ringoszillatoren RO1, RO2, RO3, RO4 dargestellt. Jeder Ringoszillator RO1, RO2, RO3, RO4 schwingt mit einer eigenen Frequenz f1, f2, f3, f4, wobei diese Frequenzen f1, f2, f3, f4 annähernd gleich sind, aber aufgrund von Herstellung und intrinsischer Effekte auf Halbleiterebene geringfügig variieren. Die eindeutige Leiterplattenkennung SIG kann damit durch einen Vergleich der Frequenzen f1, f2, f3, f4 der Ringoszillatoren RO1, RO2, RO3, RO4 ermittelt werden.

Weiterhin weist die Anordnung Verzögerungselemente VE1, VE2, VE3, VE4 auf. Die Verzögerungselemente VE1, VE2, VE3, VE4 sind auf der Leiterplatte PCB angeordnet und bilden eine jeweilige Oszillatorschleife für den jeweiligen Ringoszillator RO1, RO2, RO3, RO4 der PUF-Einheit RO-PUF, wodurch die jeweilige Oszillatorschleife der Ringoszillatoren RO1, RO2, RO3, RO4 über die Leiterplatte PCB geführt wird. Das bedeutet, ein erstes Verzögerungselemente VE1 ist über einen Ausgang (z.B. einem Ausgangsanschluss bzw. einem Output-Pin des Bauteils BE) und über einen Eingang (z.B. einem Eingangsanschluss bzw. einem Input-Pin des Bauteils BE) mit einem ersten Ringoszillator RO1 der PUF-Einheit RO-PUF verbunden und bildet damit die Oszillatorschleife des ersten Ringoszillators RO1 der PUF-Einheit RO-PUF. Dadurch wird die Frequenz f1 bzw. ein Signal des ersten Ringoszillators RO1 der PUF-Einheit RO-PUF über das erste Verzögerungselement VE1 wieder zum ersten Ringoszillator zurückgeführt und durch das erste Verzögerungselement VE1 beeinflusst. Analog dazu weisen auch ein zweiter Ringoszillator RO2 der PUF-Einheit RO-PUF ein zweites Verzögerungselement VE2, ein dritter Ringoszillator RO3 der PUF-Einheit RO-PUF ein drittes Verzögerungselement VE3 und ein vierter Ringoszillator RO4 der PUF-Einheit RO-PUF ein viertes Verzögerungselement VE4 in der jeweils zugehörigen Oszillatorschleife auf. Dadurch werden die Ringoszillatorfrequenzen f1, f2, f3, f4 der jeweiligen Ringoszillatoren RO1, RO2, RO3, RO4 der PUF-Einheit RO-PUF durch das jeweilige Verzögerungselement VE1, VE2, VE3, VE4 beeinflusst, wodurch entsprechende Varianzen bei den Ringoszillatorfrequenzen f1, f2, f3, f4 in Anhängigkeit von der Leiterplatte PCB entstehen.

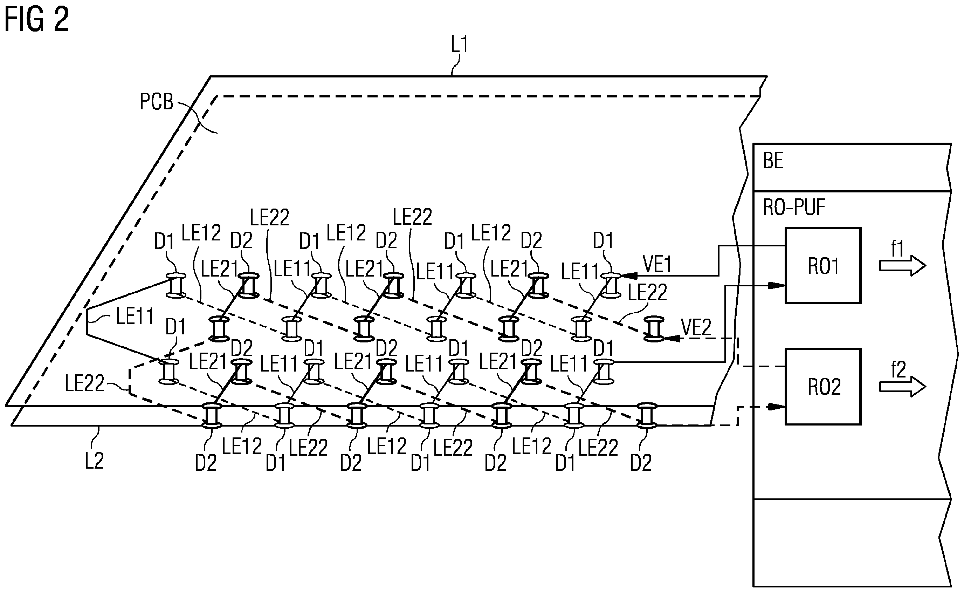

Die Verzögerungselemente VE1, VE2, VE3, VE4 sind als auf der Leiterplatte PCB geführte Leiterbahnen ausgeführt und sind nach einem speziellen Layout auf der Leiterplatte PCB bzw. auf den Leitungsschichten L1, L2 der Leiterplatte PCB angeordnet. Dieses spezielle Layout wird in der Folge anhand der Figur 2 näher erläutert.

Figur 2 zeigt beispielshaft und schematisch das spezielle Layout der auf der Leiterplatte PCB angeordneten Verzögerungselemente VE1, VE2 der Ringoszillatoren RO1, RO2 der PUF-Einheit RO-PUF in detaillierter Form. Dabei ist in Figur 2 wieder ein Ausschnitt der mehrschichtigen Leiterplatte PCB dargestellt, welche zumindest eine erste Leitungsschicht L1 und eine zweite Leitungsschicht L2 - getrennt durch eine isolierende Leiterplattenschicht - aufweist. Der Ausschnitt der Leiterplatte PCB weist beispielhaft das erste Verzögerungselemente VE1 und das zweite Verzögerungselement VE2 auf.

Weiterhin zeigt Figur 2 einen Ausschnitt des elektronischen Bauteils BE mit der PUF-Einheit RO-PUF bzw. jenen Teil der PUF-Einheit RO-PUF mit dem ersten Ringoszillator RO1, welcher mit der ersten Frequenz f1 oszilliert, und den zweiten Ringoszillator RO2, welcher mit der zweiten Frequenz f2 oszilliert. Die Oszillatorschleife des ersten Ringoszillators RO1 wird von ersten Verzögerungselement VE1 gebildet. Die Oszillatorschleife des zweiten Ringoszillators RO2 wird vom zweiten Verzögerungselement VE2 gebildet.

Das erste Verzögerungselement VE1 ist z.B. über einen Ausgangsanschluss und einen Eingangsanschluss des elektronischen Bauteils BE mit dem ersten Ringoszillator RO1 verbunden und ist als Leiterbahn ausgeführt, welche auf der Leiterplatte PCB geführt wird. Dabei weist das erste Verzögerungselement VE1 erste Abschnitte LE11 auf, welche auf der ersten Leitungsschicht L1 der Leiterplatte PCB geführt bzw. angebracht sind, und zweite Abschnitte LE12, welche auf der zweiten Leitungsschicht L2 der Leiterplatte PCB geführt bzw. angebracht sind. Eine elektrisch leitende Verbindung zwischen den ersten, auf der ersten Leiterplattenschicht L1 angebrachten Abschnitten LE11 des ersten Verzögerungselements VE1 und den zweiten, auf der zweiten Leiterplattenschicht L2 angebrachten Abschnitten LE12 des ersten Verzögerungselements VE1 werden durch elektrische Durchkontaktierungen D1 hergestellt.

Analog dem ersten Verzögerungselement VE1 ist das zweite Verzögerungselement VE2 ebenfalls z.B. über einen Ausgangsanschluss und einen Eingangsanschluss des elektronischen Bauteils BE mit dem zweiten Ringoszillator RO2 verbunden. Das zweite Verzögerungselement VE2 ist ebenfalls als Leiterbahn auf der Leiterplatte PCB ausgeführt. Das zweite Verzögerungselement VE2 weist dabei ebenfalls erste Abschnitte LE21 auf, welche auf der ersten Leitungsschicht L1 der Leiterplatte PCB geführt bzw. angebracht sind, und zweite Abschnitte L22, welche auf der zweiten Leitungsschicht L2 der Leiterplatte PCB geführt bzw. angebracht sind. Die leitende Verbindung zwischen den ersten Abschnitten L21 und den zweiten Abschnitten L22 des zweiten Verzögerungselements wird wieder mittels elektrischen Durchkontaktierungen D2 in der Leiterplatte PCB hergestellt.

Weiterhin sind die zwei beispielhaften Verzögerungselemente VE1, VE2 auf der Leiterplatte derart angeordnet, dass sich die jeweiligen ersten Abschnitte LE11 des ersten Verzögerungselements VE1 mit den jeweiligen zweiten Abschnitten LE22 des zweiten Verzögerungselements VE2 in zumindest einem Punkt überlappen bzw. überscheiden. Weiterhin überlappen bzw. überschneiden sich auch die jeweiligen ersten Abschnitte LE12 des zweiten Verzögerungselements VE2 mit den jeweiligen zweiten Abschnitten LE12 des ersten Verzögerungselements VE1. D.h. jeder der ersten Abschnitte LE11 des ersten Verzögerungselements VE1 weist in zumindest einem Punkt eine Überlappung bzw. Überschneidung mit einem der zweiten Abschnitte LE22 des zweiten Verzögerungselements VE2 auf. Ebenso weist jeder der ersten Abschnitte LE21 des zweiten Verzögerungselements VE2 mit einem der zweiten Abschnitte LE12 des ersten Verzögerungselements VE1 in zumindest einem Punkt eine Überlappung bzw. Überschneidung auf. Im Punkt bzw. Bereich der jeweiligen Überlappung bzw. Überschneidung besteht allerdings keine elektrisch leitende Verbindung bzw. kein elektrisch leitender Kontakt zwischen den beiden Verzögerungselementen VE1, VE2, da die jeweiligen sich überlappenden Abschnitte LE11, LE12, LE21, LE22 der Verzögerungselemente VE1, VE2 auf unterschiedlichen Leitungsschichten bzw. Schichten L1, L2 der Leiterplatte PCB geführt sind. D.h. die jeweiligen Abschnitte LE11, LE12, LE21, LE22 der Verzögerungselemente VE1, VE2 verlaufen im Überlappungspunkt bzw. -bereich beispielsweise übereinander.

Weiterhin sind die von den Verzögerungselementen VE1, VE2 verwendeten, elektrischen Durchkontaktierungen D1, D2 auf der Leiterplatte benachbart angeordnet. Es können dabei beispielsweise auf der Leiterplatte PCB benachbart angeordnete Durchkontaktierungen D1, D2 für die beiden Verzögerungselemente VE1, VE2 derart verwendet werden, dass die auf der ersten Leitungsschicht L1 geführten, ersten Abschnitte LE11 des ersten Verzögerungselements VE1 zu den auf der ersten Leitungsschicht L1 geführten, ersten Abschnitten LE 21 des zweiten Verzögerungselements VE2 großteils parallel verlaufen, und dass auch die auf der zweiten Leitungsschicht L2 geführten, zweiten Abschnitte LE21 des ersten Verzögerungselements VE1 zu den auf der zweiten Leitungsschicht L2 geführten, zweiten Abschnitten LE22 des zweiten Verzögerungselements VE2 großteils einen parallelen Verlauf aufweisen.

Durch das in Figur 2 beispielhaft dargestellte Layout, mit welchem jeweils zwei Verzögerungselemente VE1, VE2, VE3, VE4 der Anordnung auf der Leiterplatte PCB angeordnet bzw. kombiniert werden, bilden die jeweils zwei Verzögerungselemente VE1, VE2, VE3, VE4 jeweils ein auf der Leiterplatte PCB realisiertes verdrilltes Leiterbahnenpaar. Dabei bilden insbesondere die elektrischen Durchkontaktierungen D1, D2, welche vom jeweiligen Verzögerungselemente VE1, VE2, VE3, VE4 genutzt werden, einen Hauptquelle für eine Maß für einen Informationsgehalt bzw. eine Entropie für die PUF-Einheit RO-PUF, durch welche die jeweilige Ringoszillatorfrequenz f1, f2, f3, f4 des jeweiligen Ringoszillator RO1, RO2, RO3, RO4 vom jeweiligen Verzögerungselemente VE1, VE2, VE3, VE4 leiterplattenspezifisch beeinflusst wird.

Die durch das jeweilige Verzögerungselement VE1, VE2, VE3, VE4 und damit von Herstellungs- bzw. Produktionsunterschieden und intrinsischen Effekten in der Leiterplatte PCB beeinflussten Ringoszillatorfrequenzen f1, f2, f3, f4 werden vom jeweiligen Ringoszillator RO1, RO2, RO3, RO4 - wie beispielhaft in Figur 1 dargestellt - als Eingangssignale beispielsweise an Selektionsschaltungen MUX1, MUX2 geführt. Als Selektionsschaltungen MUX1, MUX1 können beispielsweise Multiplexer MUX1, MUX2 eingesetzt werden. Vom jeweiligen Multiplexer MUX1, MUX2 wird dann jeweils eine Ringoszillatorfrequenz f1, f2, f3, f4 ausgewählt und beispielsweise an Zählereinheiten C1, C2 weitergeleitet, welche beispielsweise steigende und/oder fallende Flanke der jeweiligen Ringoszillatorfrequenz f1, f2, f3, f4 auswerten und ein Auswertungsergebnis der jeweiligen Ringoszillatorfrequenz f1, f2, f3, f4 an eine Komparatoreinheit COMP für z.B. einen paarweisen Frequenzvergleich weiterleiten. Die Auswahl der jeweiligen Ringoszillatorfrequenz f1, f2, f3, f4 durch den jeweiligen Multiplexer MUX1, MUX2, welche an eine der Zählereinheit C1, C2 und die Komparatoreinheit COMP weitergeleitet wird, erfolgt beispielsweise anhand eines vorgegebenen Eingabe- bzw. Challenge-Musters CP der Ringoszillator-PUF-Einheit RO-PUF. Ein direktes Ergebnis der Komparatoreinheit COMP beispielsweise aus dem paarweisen Frequenzvergleich wird dann einer Fehlerkorrektur ECC zugeführt, um eine stabile Leiterplattenkennung SIG zu erhalten. Diese Leiterplattenkennung SIG ist aufgrund der auf der Leiterplatte PCB angeordneten Verzögerungselemente VE1, VE2, VE3, VE4 eindeutig und spezifisch für die jeweilige Leiterplatte PCB.

Die Anordnung bzw. die PUF-Einheit RO-PUF ist dazu eingerichtet, die eindeutige Leiterplattenkennung SIG beispielsweise während einer Verknüpfungsphase erstmalig zu ermitteln und die ermittelte, eindeutige Leiterplattenkennung SIG während dieser Verknüpfungsphase permanent im elektronischen Bauteil BE abzuspeichern. Die Verknüpfungsphase kann beispielsweise als initiale Verknüpfungsphase während eines erstmaligen Inbetriebnehmens bzw. Einschaltens der Schaltung, welche das elektronische Bauteil BE umfasst, einmal durchlaufen werden. So kann die erstmalige Ermittlung der eindeutigen Leiterplattenkennung SIG sowie das permanente Abspeichern der Leiterplattenkennung SIG im elektronischen Bauteil BE z.B. während eines erstmaligen sogenannten Power-On Resets des elektronischen Bauteils BE erfolgen. Als Power-On Reset wird ein Zurücksetzen einer digitalen Schaltung bzw. einer integrierten Schaltung bezeichnet, welches nach Anlegen einer Versorgungsspannung für einen definierten Start der Schaltung und damit des elektronischen Bauteils BE sorgt, sobald die Versorgungsspannung der Schaltung ihren Nennwert erreicht hat.

Für ein permanentes Abspeichern der Leiterplattenkennung SIG kann die Anordnung beispielsweise eine Speichereinheit SE aufweisen, welche zumindest im elektronischen Bauteile BE angeordnet ist. Die Speichereinheit SE kann allerdings auch direkt in der PUF-Einheit RO-PUF angeordnet sein. Die Speichereinheit kann beispielsweise als Anordnung von Sicherungsleitungen ausgestaltet, in welche die ermittelten, eindeutige Leiterplattenkennung SIG während der initialen Verknüpfungsphase eingebrannt wird. Die Leiterplattenkennung SIG ist dadurch einmalig und permanent in der Speichereinheit SE bzw. im elektronischen Bauteil BE gespeichert.

Weiterhin kann die Speichereinheit SE für ein permanente Abspeicherung der Leiterplattenkennung SIG aktivierbar ausgestaltet sein. D.h. die Leiterplattenkennung SIG wird erst nach Aktivierung der Speichereinheit SE, in dieser permanent abgelegt. Vor der Aktivierung ist die Speichereinheit SE inaktiv geschaltet und das elektronische Bauteil BE bzw. eine auf der Leiterplatte PCB angeordnete Schaltung oder ein Gerät kann z.B. in einer Testphase getestet werden, ohne dass die Leiterplattenkennung SIG bereits permanent im Bauteil BE gespeichert wird. Erst nach z.B. erfolgter Testphase kann die Speichereinheit SE z.B. in einer vertrauenswürdigen Umgebung (z.B. beim Hersteller) aktiv geschaltet werden und die Verknüpfungsphase durchlaufen werden, während der zuerst die Leiterplattenkennung SIG ermittelt und in der Speichereinheit SE erstmalig und permanent abgelegt wird. Die Aktivierung der Speichereinheit SE kann z.B. über eine Testschnittstelle, wie z.B. ein sogenanntes JTAG-Interface, erfolgen.

Weiterhin ist die Anordnung dazu eingerichtet, dass die eindeutige Leiterplattenkennung SIG im laufenden Betrieb, z.B. während jedes Power-on Resets des elektronischen Bauteils BE, neuerlich generiert werden. Die im laufenden Betrieb des elektronischen Bauteils BE generierte Leiterplattenkennung SIG kann dann mit der im Bauteil BE permanent gespeicherten Leiterplattenkennung SIG verglichen werden. Bei Übereinstimmung der neuerlich generierten Leiterplattenkennung SIG mit der im Bauteil BE abgespeicherten Leiterplattenkennung SIG kann dann beispielsweise der Power-On Reset für das restliche, elektronische Bauteil BE bzw. die restliche, integrierte Schaltung BE vorgesetzt werden. Gibt es keine Übereinstimmung, so kann beispielsweise ein Hochlaufen des elektronischen Bauteils BE gestoppt und damit eine Nutzung des elektronischen Bauteils BE auf einer anderen Leiterplatte als der ursprünglichen Leiterplatte PCB verhindert werden.

## Patentansprüche

1. Anordnung zum Ermitteln einer eindeutigen Leiterplattenkennung (SIG), durch welche ein auf einer Leiterplatte (PCB) angebrachtes, elektronisches Bauteil (BE) eindeutig mit der Leiterplatte (PCB) verknüpft wird, wobei die Anordnung zumindest aufweist:
- eine PUF-Einheit (RO-PUF) mit Ringoszillatoren (RO1, RO2, RO3, RO4), welche anhand von Frequenzen (f1, f2, f3, f4) der Ringoszillatoren (RO1, RO2, RO3, RO4) die Leiterplattenkennung (SIG) ermittelt und welche im elektronischen Bauteil (BE) angeordnet ist,
- und Verzögerungselemente (VE1, VE2, VE3, VE4), welche auf der Leiterplatte (PCB) angebracht sind, wobei jeweils ein Verzögerungselement (VE1, VE2, VE3, VE4) eine Oszillatorschleife eines Ringoszillators (RO1, RO2, RO3, RO4) der PUF-Einheit (RO-PUF) bildet, ***dadurch gekennzeichnet, dass*** die Verzögerungselemente (VE1, VE2, VE3, VE4) als auf der Leiterplatte (PCB) geführte Leiterbahnen ausgestaltet sind, dass jedes Verzögerungselement (VE1, VE2, VE3, VE4) erste Abschnitte(LE11, LE21), welche auf einer ersten Leitungsschicht (L1) der Leiterplatte (PCB) geführt sind, und zweite Abschnitte(LE12, LE22), welche auf einer zweiten Leitungsschicht (L2) der Leiterplatte (PCB) geführt sind, aufweist, dass die auf der ersten Leitungsschicht (L1) der Leiterplatte (PCB) geführten, ersten Abschnitte (LE11, LE21) des jeweiligen Verzögerungselements (VE1, VE2, VE3, VE4) und die auf der zweiten Leitungsschicht (L2) der Leiterplatte (PCB) geführten, zweiten Abschnitte (LE12, LE22) des jeweiligen Verzögerungselements (VE1, VE2, VE3, VE4) über elektrische Durchkontaktierungen (D1, D2) verbunden sind, und dass jeweils zwei Verzögerungselemente (VE1, VE2, VE3, VE4) auf der Leiterplatte (PCB) derart angeordnet sind, dass sich die jeweiligen, ersten Abschnitte (LE11, LE21) der jeweils zwei Verzögerungselemente (VE1, VE2, VE3, VE4) mit den jeweiligen zweiten Abschnitten (LE12, LE22) der jeweils zwei Verzögerungselemente (VE1, VE2, VE3, VE4) in zumindest einem Punkt überlappen.

2. Anordnung nach Anspruch 1, **dadurch gekennzeichnet, dass** die elektrischen Durchkontaktierungen (D1, D2), welche von den jeweils zwei Verzögerungselementen (VE1, VE2, VE3, VE4) verwendet werden, auf der Leiterplatte (PCB) benachbart angeordnet sind.

3. Anordnung nach einem der vorangegangenen Ansprüche,
***dadurch gekennzeichnet, dass*** die Anordnung dazu eingerichtet ist, während einer Verknüpfungsphase die Leiterplattenkennung (SIG) zu ermitteln und permanent im elektronischen Bauteil (BE) abzuspeichern.

4. Anordnung nach Anspruch 3, ***dadurch gekennzeichnet, dass*** die Anordnung weiterhin dazu eingerichtet ist, die Leiterplattenkennung (SIG) während eines laufenden Betriebs des elektronischen Bauteils (PCB) erneut zu generieren und mit der permanent im elektronischen Bauteil (BE) abgespeicherten Leiterplattenkennung (SIG) zu vergleichen.

5. Anordnung nach einem der vorangegangenen Ansprüche,
***dadurch gekennzeichnet, dass*** die Anordnung eine Speichereinheit (SE) für ein permanentes Abspeichern der Leiterplattenkennung (SIG) aufweist.

6. Anordnung nach Anspruch 5, ***dadurch gekennzeichnet, dass*** die Speichereinheit (SE) für ein permanentes Abspeichern der Leiterplattenkennung (SIG) aktivierbar ausgestaltet ist.

7. Anordnung nach Anspruch 6, ***dadurch gekennzeichnet, dass*** die Anordnung dazu eingerichtet ist, dass eine Aktivierung der Speichereinheit (SE) für das permanente Abspeichern der Leiterplattenkennung (SIG) über eine Testschnittstelle erfolgt.

8. Anordnung nach einem der Ansprüche 5 bis 7, ***dadurch gekennzeichnet, dass*** die Speichereinheit (SE) als Anordnung bauteilinterner Sicherungsleitungen ausgestaltet ist.

9. Anordnung nach einem der vorangegangenen Ansprüche ***dadurch gekennzeichnet, dass*** das elektronische Bauteil (BE) als sogenannte anwendungsspezifische, integrierte Schaltung oder kurz ASIC ausgeführt ist.

## Claims

1. Arrangement for ascertaining an unambiguous circuit board identifier (SIG), by way of which an electronic component (BE) attached to a circuit board (PCB) can be unambiguously linked to the circuit board (PCB), wherein the arrangement at least has:
- a PUF unit (RO-PUF) with ring oscillators (RO1, RO2, RO3, RO4), which ascertains the circuit board identifier (SIG) on the basis of frequencies (f1, f2, f3, f4) of the ring oscillators (RO1, RO2, RO3, RO4) and which is arranged in the electronic component (BE),
- and delay elements (VE1, VE2, VE3, VE4), which are attached to the circuit board (PCB), wherein in each case a delay element (VE1, VE2, VE3, VE4) forms an oscillator loop of a ring oscillator (RO1, RO2, RO3, RO4) of the PUF unit (RO-PUF), ***characterised in that*** the delay elements (VE1, VE2, VE3, VE4) are embodied as conductor paths guided on the circuit board (PCB), that each delay element (VE1, VE2, VE3, VE4) has first sections (LE11, LE21), which are guided on a first conducting layer (L1) of the circuit board (PCB), and second sections (LE12, LE22), which are guided on a second conducting layer (L2) of the circuit board (PCB), that the first sections (LE11, LE21) of the respective delay elements (VE1, VE2, VE3, VE4) guided on the first conducting layer (L1) of the circuit board (PCB) and the second sections (LE12, LE22) of the respective delay elements (VE1, VE2, VE3, VE4) guided on the second conducting layer (L2) of the circuit board (PCB) are connected via electrical vias (D1, D2), and that two delay elements (VE1, VE2, VE3, VE4) in each case are arranged on the circuit board (PCB) in such a manner that the respective first sections (LE11, LE21) of the two delay elements (VE1, VE2, VE3, VE4) in each case overlap with the respective two sections (LE12, LE22) of the two delay elements (VE1, VE2, VE3, VE4) in each case at at least one point.

2. Arrangement according to claim 1, ***characterised in that*** the electrical vias (D1, D2), which are used by the two delay elements (VE1, VE2, VE3, VE4) in each case, are arranged adjacently on the circuit board (PCB).

3. Arrangement according to one of the preceding claims,
***characterised in that*** the arrangement is configured, during a linking phase, to ascertain the circuit board identifier (SIG) and to permanently store it in the electronic component (BE).

4. Arrangement according to claim 3, ***characterised in that*** the arrangement is furthermore configured to generate the circuit board identifier (SIG) anew during ongoing operation of the electronic component (PCB) and to compare it with the circuit board identifier (SIG) permanently stored in the electronic component (BE).

5. Arrangement according to one of the preceding claims, *c**haracterised in that*** the arrangement has a storage unit (SE) for permanent storage of the circuit board identifier (SIG).

6. Arrangement according to claim 5, ***characterised in that*** the storage unit (SE) is embodied such that it can be activated for permanent storage of the circuit board identifier (SIG).

7. Arrangement according to claim 6, ***characterised in that*** the arrangement is configured such that an activation of the storage unit (SE) for the permanent storage of the circuit board identifier (SIG) takes place via a test interface.

8. Arrangement according to one of claims 5 to 7,
***characterised in that*** the storage unit (SE) is embodied as an arrangement of component-internal backup lines.

9. Arrangement according to one of the preceding claims ***characterised in that*** the electronic component (BE) is designed as what is known as an application-specific integrated circuit, or ASIC for short.

## Revendications

1. Agencement pour saisir une identification univoque (SIG) d'une carte de circuits imprimés (PCB) assurant l'association univoque d'un composant électronique (BE) monté sur la carte de circuits imprimés (PCB) à la carte de circuits imprimés (PCB), l'agencement présentant au moins :
une unité PUF (RO-PUF) comportant des oscillateurs annulaires (RO1, RO2, RO3, RO4) saisissant l'identification de la carte de circuits imprimés (SIG) au moyen des fréquences (f1, f2, f3, f4) des oscillateurs annulaires (RO1, RO2, RO3, RO4), et qui se trouve intégrée au composant électronique (BE),
et des éléments retardateurs (VE1, VE2, VE3, VE4) montés sur la carte de circuits imprimés (PCB), un élément retardateur (VE1, VE2, VE3, VE4) constituant chacun une boucle d'oscillateur d'un oscillateur annulaire (RO1, RO2, RO3, RO4) de l'unité PUF (RO-PUF), **caractérisé en ce que** les éléments retardateurs (VE1, VE2, VE3, VE4) sont réalisés sous forme de pistes conductrices guidées sur la carte de circuits imprimés (PCB), **en ce que** chaque élément retardateur (VE1, VE2, VE3, VE4) présente des premiers secteurs (LE11, LE21) guidés sur une première couche conductrice (L1) de la carte de circuits imprimés (PCB), et des deuxièmes secteurs (LE12, LE22) guidés sur une deuxième couche conductrice (L2) de la carte de circuits imprimés (PCB), **en ce que** les premiers secteurs (LE11, LE21) guidés sur la première couche conductrice (L1) de la carte de circuits imprimés (PCB) de l'élément retardateur (VE1, VE2, VE3, VE4) correspondant et les deuxièmes secteurs (LE12, LE22) guidés sur la deuxième couche conductrice (L2) de la carte de circuits imprimés (PCB) de l'élément retardateur (VE1, VE2, VE3, VE4) correspondant sont reliés grâce à des vias électriques (Dl, D2), et **en ce que** deux éléments retardateurs (VE1, VE2, VE3, VE4) sont agencés chacun sur la carte de circuits imprimés (PCB) de sorte que les premiers secteurs (LE11, LE21) correspondants des deux éléments retardateurs (VE1, VE2, VE3, VE4) respectifs et les deuxièmes secteurs (LE12, LE22) des deux éléments retardateurs (VE1,VE2, VE3, VE4) respectifs se chevauchent au moins en un point.

2. Agencement selon la revendication 1, **caractérisé en ce que** les vias électriques (D1, D2) utilisés par les deux éléments retardateurs (VE1, VE2, VE3, VE4) respectifs sont disposés de manière adjacente sur la carte de circuits imprimés (PCB).

3. Agencement selon l'une des revendications précédentes, **caractérisé en ce que** l'agencement est configuré pour saisir l'identification de la carte de circuits imprimés (SIG) pendant une phase d'association et la mettre en mémoire en permanence dans le composant électronique (BE).

4. Agencement selon la revendication 3, **caractérisé en ce que** l'agencement est par ailleurs configuré pour générer à nouveau l'identification de la carte de circuits imprimés (SIG) pendant le fonctionnement du composant électronique (PCB) et la comparer à l'identification de la carte de circuits imprimés (SIG) stockée en permanence dans le composant électronique (BE).

5. Agencement selon l'une des revendications précédentes, **caractérisé en ce que** l'agencement présente une unité de stockage (SE) pour un stockage permanent de l'identification de la carte de circuits imprimés (SIG).

6. Agencement selon la revendication 5, **caractérisé en ce que** l'unité de stockage (SE) est conçue pour stocker en permanence l'identification de la carte de circuits imprimés (SIG) de manière activable.

7. Agencement selon la revendication 6, **caractérisé en ce que** l'agencement est configuré pour assurer l'activation de l'unité de stockage (SE) pour le stockage permanent de l'identification de la carte de circuits imprimés (SIG) par l'intermédiaire d'une interface de test.

8. Agencement selon l'une des revendications 5 à 7, **caractérisé en ce que** l'unité de stockage (SE) est conçue sous forme d'agencement de conduits de sécurité internes au composant.

9. Agencement selon l'une des revendications précédentes, **caractérisé en ce que** le composant électronique (BE) est réalisé sous forme de circuit imprimé dit sur mesure ou, brièvement, ASIC.
